# EUROPEAN PATENT SPECIFICATION

(11) **EP 2 450 021 B1**
(45) Date of publication and mention of the grant of the patent: **07.10.2015**
(21) Application number: 11188137.1
(22) Date of filing: 07.11.2011
(51) Int. Cl.: A61G 7/10

(54) **Clip mechanism**
Clip-Mechanismus
Mécanisme de pince

(30) Priority: 08.11.2010 GB 201018813
(43) Date of publication of application: 09.05.2012
(73) Proprietor: Care and Independence Systems Ltd, Bicester, Oxfordshire OX26 4LD (GB)
(72) Inventor: Cheal, Peter, Bicester, Oxfordshire OX26 4LD (GB); Handley, Richard, Bicester, Oxfordshire OX26 4LD (GB)
(74) Representative: Mansfield, Peter Turquand

(56) References cited:
- EP-A1- 1 440 676
- EP-A2- 1 064 906
- WO-A2-2007/035098

## Description

The present invention relates to a clip mechanism for securing an item, such as a strap, onto a projecting button so that it is subsequently removable.

The invention is applicable for lifting devices such as those used to lift or move people, for example disabled people. The person to be lifted is supported by a sling that is attached by straps to a lifting mechanism such as a mechanical hoist. A known way of attaching the straps to the lifting mechanism relies on clasps at the ends of the straps that can fit over a mushroom-shaped button that projects from the lifting mechanism. The button has a shaft with an enlarged head. The clasp may define a tapered slot which is wide enough at one end for the head of the button to pass through the slot, but at the other end is only wide enough for the shaft.

WO 2007/035098 describes a clip mechanism for securing an item on to a projecting button, the button defining a shaft with a head, comprising a frame element and a slot-defining element movable relative to the frame element. In one position the frame element and the slot-defining element define a large aperture through which the head of the button can pass, whereas in another position the slot-defining element blocks most of the aperture, so the head cannot be withdrawn.

According to the present invention there is provided a clip mechanism for securing an item onto a projecting button as defined by claim 1.

In a preferred embodiment the slot-defining element is resiliently urged into the first relative position. This may utilise springs within the clip mechanism, for example one or more compression springs.

Releasing the clip mechanism only requires a user to move the frame element relative to the slot-defining element. The movement of the frame element moves the locking elements, and so releases the shaft.

In one embodiment the locking elements are balls, and may be metal balls as used as ball-bearings. Another form of locking element is a link pivotally connected to the frame element, and guided between the position protruding into the slot, so preventing the shaft portion from being displaced along the slot, and the position in which the shaft portion can be slid along the slot.

Preferably the frame element comprises upper and lower plate elements, and the slot-defining element is located between the upper and lower plate elements. In the preferred embodiment the frame element comprises upper and lower plate elements. In one embodiment the frame element defines a path along which the locking element is free to move, the path extending in a direction orthogonal to the slot; the slot-defining element also defines a first recess for the locking element that prevents movement along the path, and a second recess for the locking element that permits movement along the path. In one embodiment the first recess and the second recess communicate with each other.

The slot-defining element may define a protrusion to urge the locking element along the path into the second recess, as the movable element is moved towards the second relative position.

In an alternative embodiment the slot-defining element defines a path along which the locking element can move.

The invention will now be further and more particularly described, by way of example only, and with reference to the accompanying drawings in which:
Figure 1 shows a perspective view of a clip mechanism of the invention;
Figure 2a shows a plan view of the clip mechanism of figure 1 in the locked position, hidden elements being shown in broken lines;
Figure 2b shows a plan view of the clip mechanism of figure 1 in the open position;
Figure 3 shows a plan view of a frame plate of the clip mechanism of figure 1;
Figure 3a shows a sectional view on the line A-A of figure 3;
Figure 3b shows a sectional view on the line B-B of figure 3;
Figure 3c shows a sectional view on the line C-C of figure 3;
Figure 4 shows a plan view of a slidable plate of the clip mechanism of figure 1;
Figure 5a shows a plan view of an alternative clip mechanism of the invention in the locked position, with the front frame plate removed to show the mechanism;
Figure 5b shows a plan view of the clip mechanism of figure 5a in the open position;
Figure 5c shows a sectional view on the line C-C of figure 5a;
Figure 6a shows a plan view of the outer surface of a frame plate of the clip mechanism of figure 5a;
Figure 6b shows a plan view of the inner surface of the frame plate of figure 6a;
Figure 6c shows a side view of the frame plate of figure 6a in the direction of arrow S; and
Figure 7 shows a plan view of the slidable plate of the clip mechanism of figure 5a.

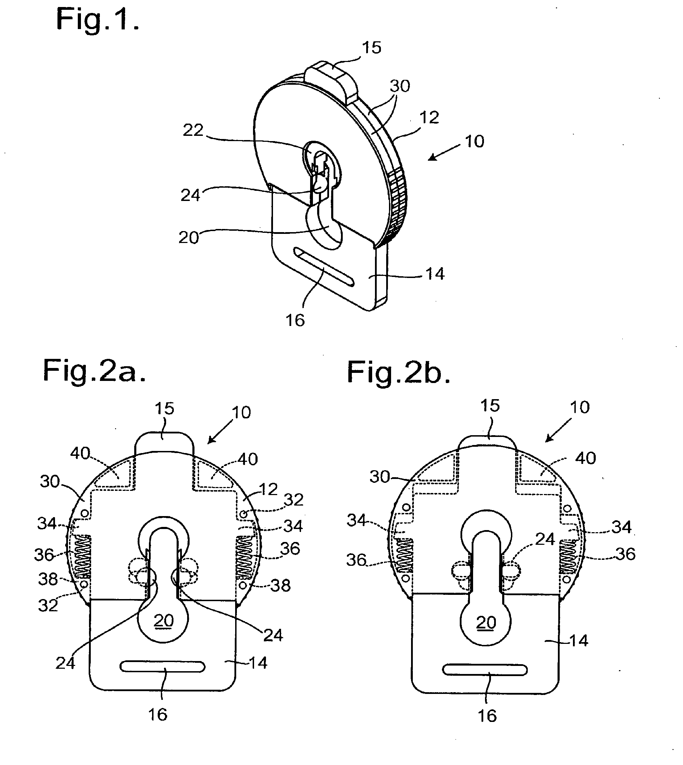

Referring to figure 1, a clip 10 consists of a frame 12 within which is a plate 14, and the plate 14 projects both above and below the frame 12 (as shown). The frame 12 and the plate 14 are movable relative to each other. For the purposes of this description the plate 14 is considered as the movable component, and will be referred to as the slidable plate 14; it will nevertheless be appreciated that the frame 12 might instead be considered as the component that moves. The slidable plate 14 includes a projecting tab 15 at the top end (as shown) and defines a slot 16 at the opposite end to which a strap (not shown) may be connected, and also defines a keyhole shaped slot 20 that extends along its centreline, with a large circular portion at the bottom end (as shown) from which a narrower portion extends upward (as shown). The narrower portion of the slot 20 is also defined in part by the frame 12, and the frame 12 defines a larger circular aperture 22 adjacent to the upper end of the narrower portion of the slot 20.

A projecting button (not shown) in the form of a shaft with a larger head can therefore be passed through the circular portion of the keyhole-shaped slot 20, but only the shaft of the button can fit through the narrower portion. If the shaft is at the top end of the narrower portion, the head of the button can locate in the aperture 22, but it cannot pass through the slidable plate 14. At an intermediate position along the length of the keyhole-shaped slot 20 the clip 10 includes two steel balls 24 (only one of which is shown in figure 1) which, in the position shown, project partly into the narrower portion 22 of the slot 20.

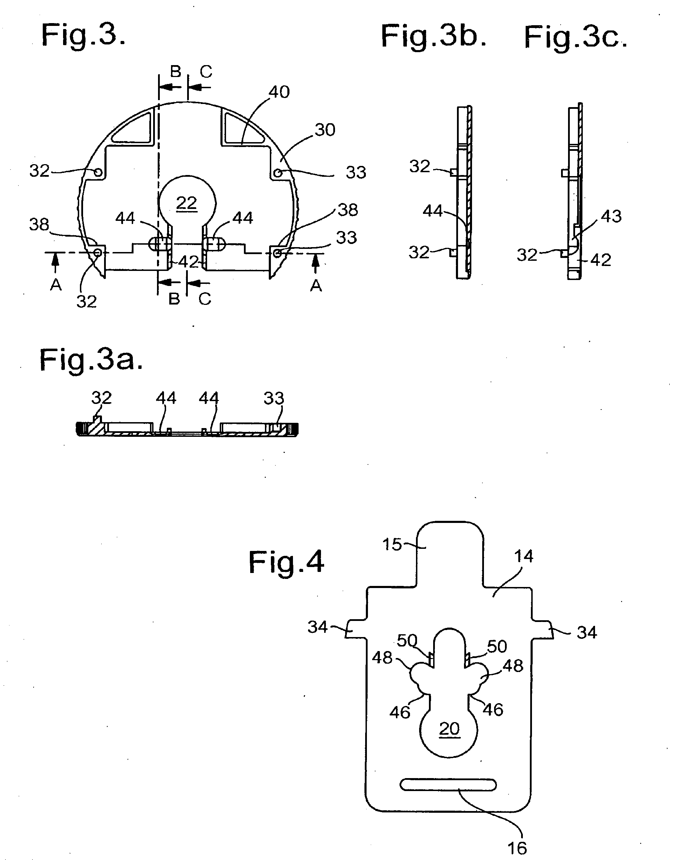

Referring also to figure 2a, the frame 12 consists of two generally circular frame plates 30 between which the slidable plate 14 is sandwiched, the frame plates 30 being secured together by projecting pins 32 that locate in corresponding recesses 33 (see figure 3). The frame plates 30 together define a rectangular channel through which the slidable plate 14 can slide. The slidable plate 14 defines two projecting tabs 34, one on either side, and compression springs 36 act between these tabs 34 and a step 38 defined by the frame plates 30. Consequently the slidable plate 14 is urged by the springs 36 into the position shown in figure 2a, in which the slidable plate 14 abuts stops 40 defined by the frame plates 30, with the tab 15 projecting to its largest extent. In this position the balls 24 project into the slot 20. This may be referred to as the locked position of the clip 10, and is the position that the clip 10 will adopt when released.

As shown in figure 2b, the slidable plate 14 may be pushed downwardly relative to the frame 12 (or the frame 12 pushed upwardly relative to the slidable plate 14) so that the springs 36 are compressed. In this position the balls 24 do not project into the slot 20, so that the shaft of a button can be freely moved from one end of the slot 20 to the other. This may be referred to as the open position of the clip 10.

Referring now to figure 3, the frame plates 30 define ridges 42 alongside the narrower portion of the keyhole-shaped slot 20, and as shown in figure 3c there is a circular aperture 43 in the ridges 42 through which the balls 24 can protrude. In addition, as shown in figures 3a and 3b, there are shallow grooves 44 defined by the frame plates 30 aligned with the circular apertures 43 and defining a path orthogonal to the axis of the keyhole-shaped slot 20. The balls 24 locate in the grooves 44 and so can move along that path.

Referring now to figure 4, the slidable plate 14 also defines, on each side of the keyhole-shaped slot 20, a quarter-cylindrical recess 46 which communicates with a larger recess 48. The upper end of the larger recess 48 is separated from the keyhole-shaped slot 20 by an acute-angled projection 50 which is cut slightly thinner than the remainder of the plate 14.

When the clip 10 is in the locked position as shown in figure 2a the balls 24 locate in the quarter-cylindrical recesses 46, and in each case the wall of the recess 46 prevents the ball 24 from moving along the path away from the keyhole-shaped slot 20. However, when the slidable plate 14 is moved into the open position as shown in figure 2b, the balls 24 can move along the orthogonal path away from the keyhole-shaped slot 20 and move into the larger recesses 48. As the slidable plate 14 is moved into that position relative to the frame 12, the acute-angled projections 50 push the balls 24 outwardly along that path, so they no longer project into the keyhole-shaped slot 20; and the upper part of the ridges 42 fit over the thin parts of the projections 50.

The clip 10, as mentioned above, is permanently fixed to the end of a strap through the slot 16. This strap may form part of a harness, or a sling for example. In use, the clip 10 is fitted onto a projecting button on a hoist mechanism, the head of the button passing through the large circular part of the keyhole-shaped slot 20. If the button is then slid up along the keyhole-shaped slot 20 it pushes the balls 24 in that direction, and so pushes the frame 12 into the open position. The balls 24 move outwardly into the recesses 48, allowing the button to move to the top of the keyhole-shaped slot 20. Once the button has passed the balls 24, the pressure of the springs 36 moves the clip 10 back into the locked position shown in figure 2a. The balls 24 prevent the button from moving back along the keyhole-shaped slot 20, so the button cannot be unintentionally removed from the clip 10. To remove the clip 10 from the button, an operator must push the projecting tab 15 down relative to the frame 12, or slide the frame 12 up relative to the slidable plate 14, so that the clip 10 is then in the open position shown in figure 2b.

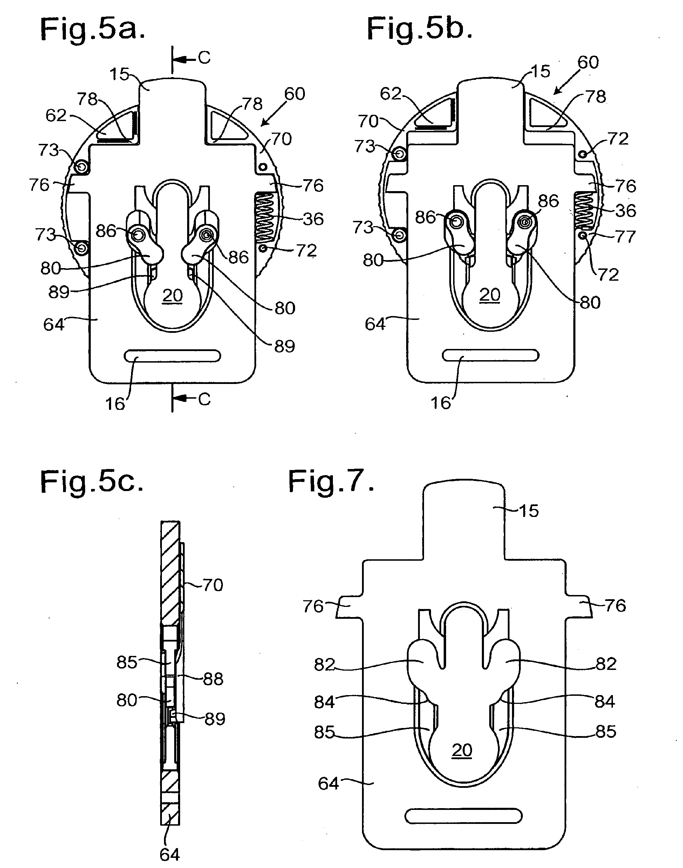

Referring now to Figure 5a, an alternative clip 60 is shown, which has several features in common with the clip 10, and which is used in the same way. Its external appearance is substantially as shown in figure 1, the most significant difference being the nature of the locking elements. Features which are the same are referred to by the same reference numeral.

The clip 60 consists of a frame 62 within which is a plate 64, and the plate 64 projects both above and below the frame 62 (as shown). The frame 62 and the plate 64 are movable relative to each other. For the purposes of describing the operation of the clip 60, the frame 62 is considered as the movable component; it will nevertheless be appreciated that the plate 64 might instead be considered as the component that moves. The plate 64 includes a projecting tab 15 at the top end (as shown) and defines a slot 16 at the opposite end to which a strap (not shown) may be connected, and also defines a keyhole-shaped slot 20 that extends along its centreline, with a large circular portion at the bottom end (as shown) from which a narrower portion extends upward (as shown). The narrower portion of the slot 20 is also defined in part by the frame 62.

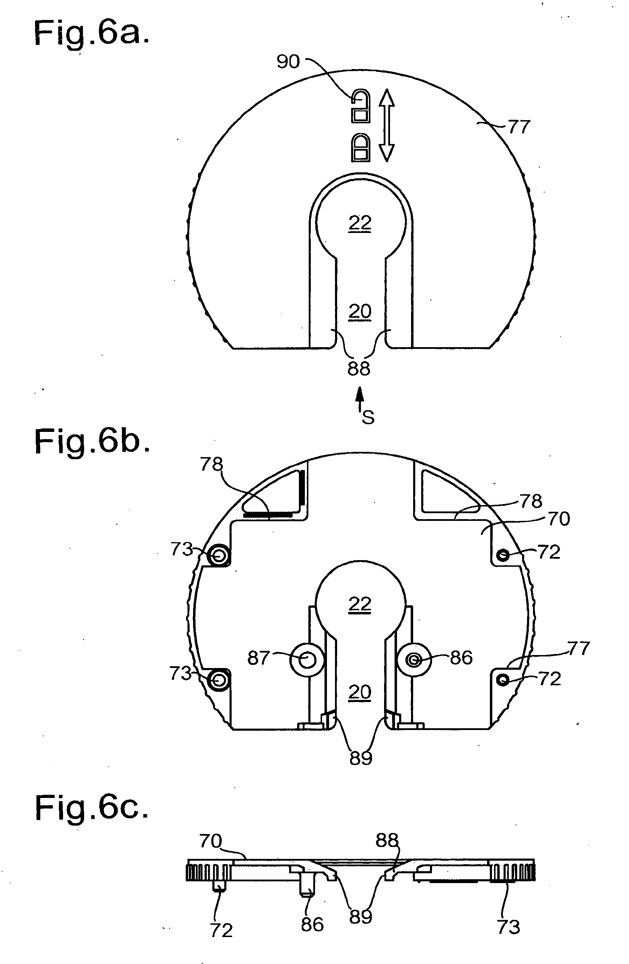

The frame 62 consists of two generally circular frame plates 70 between which the plate 64 is sandwiched, the frame plates 70 being secured together by projecting pins 72 (see also figure 6c) that locate in corresponding recesses 73. The upper frame plate 70 is not shown in figures 5a to 5c, so that the mechanism of the clip 60 is visible. The frame plates 70 together define a channel or guide through which the plate 64 can slide. As shown in Figures 6a and 6b the frame 62 defines a larger circular aperture 22 adjacent to the upper end of the narrower portion of the slot 20.

In use, a projecting button (not shown) in the form of a shaft with a larger head can therefore be passed through the circular portion of the keyhole-shaped slot 20, but only the shaft of the button can fit through the narrower portion. If the shaft is at the top end of the narrower portion, the head of the button can locate in the aperture 22, but it cannot pass through the plate 64.

Referring also to figure 5b, the plate 64 defines two projecting tabs 76, one on either side, and a compression spring 36 acts between one of these tabs 76 and a step 77 defined by the frame plates 70. Consequently the frame 62 is urged by the spring 36 into the position shown in figure 5a, in which the plate 64 abuts stops 78 defined by the frame plates 70, with the tab 15 projecting to its largest extent. The clip 60 includes two pivoted bars 80 with rounded ends; and in this position of the clip 60 these bars 80 protrude partly into the narrower portion 22 of the slot 20. This may be referred to as the locked position of the clip 60, and is the position that the clip 60 will adopt when released.

As shown in figure 5b, the plate 64 may be pushed downwardly relative to the frame 62, or the frame 62 pushed upwardly relative to the plate 64, so that the spring 36 is compressed. In this position the bars 80 do not project into the slot 20, so that the shaft of a button can be freely moved from one end of the slot 20 to the other. This may be referred to as the open position of the clip 60.

Referring now to figure 7, the plate 64 defines not only the keyhole shaped slot 20 but also two side slots 82 which communicate with opposite sides of the slot 20, having a portion substantially parallel to the slot 20, and a linking portion to communicate to the slot 20, the linking portion defining a curved step 84. The portions 85 of the plate 64 adjacent to each side of the keyhole-shaped slot 20 are slightly thinner than the remainder of the plate 64.

Referring to figures 5a and 5b, and figure 6b, the bars 80 are pivotally connected at one end to the frame plates 70 by projecting pivot pins 86 which locate in corresponding recesses 87 on the opposite frame plate 70, these being arranged so that the bars 80 locate in the side slots 82.

As shown in figure 5c, and in figures 6a to 6c, the portions 88 of the frame plates 70 alongside the slot 20 slope down to the edge of the slot 20. At the bottom edge (as shown) of the frame plate 70, adjacent to the slot 20, are small projecting rims 89 which project below the edge of the sloping portions 88. Referring in particular to figures 6b and 6c, the frame plates 70 are welded together where the projecting pins 72 fit into the recesses 73, where the pivot pins 86 fit into the recesses 87, at the generally triangular stops 78, and also where the opposed projecting rims 89 meet.

As shown in figures 6a and 6b, each frame plate 70 is embossed with an arrow and symbols 90 indicating how the clip 60 can be opened.

Consequently movement of the frame 62 relative to the plate 64 moves the bars 80 along the side slots 82. When the clip 60 is in the locked position as shown in figure 5a the lower portions of the bars 80 project into the slot 20, and their outer faces rest against the curved step 84. This ensures that the bars 80 cannot be pushed sideways out of the slot 20, and so they obstruct the slot 20. However, when the frame 62 is pushed up so the clip 60 is in the open position shown in figure 5b, the pivot pins 86 and so the bars 80 are moved further into the side slots 82, so the bars 80 do not obstruct the slot 20.

So in use the clip 60 may be fixed to the end of a strap through the slot 16. The clip 60 may then be fitted onto a projecting button on a hoist mechanism, the head of the button passing through the large circular part of the keyhole-shaped slot 20. If the button is then slid up along the keyhole-shaped slot 20 it pushes the bars 80 in that direction, and so pushes the frame 62 into the open position. The bars 80 move upwardly and outwardly into the side slots 82 just far enough to allow the button to move past them. The pressure of the spring 36 then moves the clip 60 back into the locked position shown in figure 5a. The bars 80 prevent the button from moving back along the keyhole-shaped slot 20, so the button cannot be unintentionally removed from the clip 60. To remove the clip 60 from the button, an operator must push the projecting tab 15 down relative to the frame 62, or slide the frame 62 up relative to the plate 64, so that the clip 60 is then in the open position shown in figure 5b.

## Claims

1. A clip mechanism (10, 60) for securing an item onto a projecting button, the button defining a shaft portion and a head portion of greater width than the shaft portion, the clip mechanism defining a slot (20) therethrough that is closed at both ends, one portion of the slot being wide enough for the head portion of the projecting button to pass through it, while another portion of the slot is narrower, being wide enough to accommodate the shaft portion of the projecting button but not wide enough for the head portion of the projecting button to pass through it, the clip mechanism comprising a frame element (12; 62) and a slot-defining element (14; 64) movable relative to the frame element (12; 62) between a first relative position and a second relative position, and ***characterised by*** comprising two locking elements (24; 80) arranged on opposite sides of the slot (20) directly opposite each other at an intermediate position along the length of the slot (20), arranged such that when the slot-defining element (14; 64) is in the first relative position each locking element (24; 80) is held in a position protruding into the slot (20), so preventing the shaft portion from being displaced along the slot (20) to pass the locking elements (24; 80), whereas in the second relative position the locking elements (24; 80) do not prevent displacement of the shaft portion along the slot (20).

2. A clip mechanism as claimed in claim 1 wherein the slot-defining element (14; 64) is resiliently urged into the first relative position.

3. A clip mechanism as claimed in claim 2 wherein the slot-defining element (14; 64) is resiliently urged into the first relative position by at least one compression spring (36).

4. A clip mechanism as claimed in any one of the preceding claims wherein the frame element (12; 62) comprises upper and lower plate elements (30; 70), and the slot-defining element (14; 64) is located between the upper and flower plate elements (30; 70).

5. A clip mechanism as claimed in any one of the preceding claims wherein each locking element is a ball (24).

6. A clip mechanism as claimed in claim 5 wherein the frame element (12) defines a path (44) along which the locking element (24) may move, the path (44) extending in a direction orthogonal to the slot (20); and wherein the slot-defining element (14) also defines a first recess (46) for the locking element (24) that prevents movement along the path (44), and a second recess (48) for the locking element (24) that permits movement along the path (44).

7. A clip mechanism as claimed in claim 6 wherein the first recess (46) and the second recess (48) communicate with each other.

8. A clip mechanism as claimed in claim 6 or claim 7 wherein the slot-defining element (14) defines a protrusion (50) to urge the locking element (24) along the path (44) into the second recess (48), as the clip mechanism is moved towards the second relative position.

9. A clip mechanism as claimed in any one of claims 1 to 4 wherein each locking element is a bar (80) pivotally connected to the frame element (62).

10. A clip mechanism as claimed in claim 9 wherein the slot-defining element (64) also defines a first recess for the locking element (80) that prevents movement along the path, and a second recess (82) for the locking element (80) that permits movement along the path, wherein the first recess and the second recess (82) communicate with each other.

11. A clip mechanism as claimed in claim 10 wherein the first recess (82) defines a step (84) to secure the locking element (80) against movement out of the slot (20).

## Patentansprüche

1. Clip-Mechanismus (10, 60), um ein Teil an einem vorstehenden Taster zu sichern, wobei der Taster einen Schaftteil und einen Kopfteil definiert, der breiter ist als der Schaftteil, wobei der Clip-Mechanismus durch sich hindurch einen Schlitz (20) definiert, der an beiden Enden geschlossen ist, wobei ein Teil des Schlitzes breit genug ist, sodass der Kopfteil des vorstehenden Tasters durch ihn passieren kann, während ein anderer Teil des Schlitzes schmaler ist, wobei er breit genug ist, um den Schaftteil des vorstehenden Tasters aufzunehmen, aber nicht breit genug, sodass der Kopfteil des vorstehenden Tasters durch ihn passieren kann, wobei der Clip-Mechanismus ein Rahmenelement (12; 62) und ein Schlitz definierendes Element (14; 64) umfasst, das in Bezug auf das Rahmenelement (12; 62) zwischen einer ersten relativen Position und einer zweiten relativen Position beweglich ist und ***dadurch gekennzeichnet, dass*** er zwei Verriegelungselemente (24; 80) umfasst, die an gegenüberliegenden Seiten des Schlitzes (20) direkt gegenüber voneinander in einer Zwischenposition entlang der Länge des Schlitzes (20) angeordnet sind, wobei sie so angeordnet sind, dass, wenn sich das Schlitz definierende Element (14; 64) in der ersten relativen Position befindet, jedes Verriegelungselement (24; 80) in einer Position gehalten wird, die in den Schlitz (20) hineinragt, wodurch verhindert wird, dass der Schaftteil entlang des Schlitzes (20) verschoben wird, um die Verriegelungselemente (24; 80) zu passieren, wobei die Verriegelungselemente (24; 80) in der zweiten relativen Position eine Verschiebung des Schaftteils entlang des Schlitzes (20) nicht verhindern.

2. Clip-Mechanismus nach Anspruch 1, wobei das Schlitz definierende Element (14; 64) elastisch in die erste relative Position gedrängt wird.

3. Clip-Mechanismus nach Anspruch 2, wobei das Schlitz definierende Element (14; 64) durch mindestens eine Druckfeder (36) elastisch in die erste relative Position gedrängt wird.

4. Clip-Mechanismus nach einem der vorhergehenden Ansprüche, wobei das Rahmenelement (12; 62) obere und untere Plattenelemente (30; 70) umfasst und sich das Schlitz definierende Element (14; 64) zwischen den oberen und unteren Plattenelementen (30; 70) befindet.

5. Clip-Mechanismus nach einem der vorhergehenden Ansprüche, wobei jedes Verriegelungselement eine Kugel (24) ist.

6. Clip-Mechanismus nach Anspruch 5, wobei das Rahmenelement (12) einen Pfad (44) definiert, entlang dessen sich das Verriegelungselement (24) bewegen kann, wobei sich der Pfad (44) in einer Richtung ausdehnt, die senkrecht zu dem Schlitz (20) verläuft; und wobei das Schlitz definierende Element (14) ebenso eine erste Aussparung (46) für das Verriegelungselement (24), das eine Bewegung entlang des Pfads (44) verhindert und eine zweite Aussparung (48) für das Verriegelungselement (24) definiert, das eine Bewegung entlang des Pfads (44) ermöglicht.

7. Clip-Mechanismus nach Anspruch 6, wobei die erste Aussparung (46) und die zweite Aussparung (48) miteinander kommunizieren.

8. Clip-Mechanismus nach Anspruch 6 oder Anspruch 7, wobei das Schlitz definierende Element (14) einen Vorsprung (50) definiert, um das Verriegelungselement (24) entlang des Pfads (44) in die zweite Aussparung (48) zu drängen, wenn der Clip-Mechanismus in die zweite relative Position bewegt wird.

9. Clip-Mechanismus nach einem der Ansprüche 1 bis 4, wobei jedes Verriegelungselement eine Stange (80) ist, die drehbar mit dem Rahmenelement (62) verbunden ist.

10. Clip-Mechanismus nach Anspruch 9, wobei das Schlitz definierende Element (64) ebenso eine erste Aussparung für das Verriegelungselement (80), das eine Bewegung entlang des Pfads verhindert und eine zweite Aussparung (82) für das Verriegelungselement (80) definiert, das eine Bewegung entlang des Pfads ermöglicht, wobei die erste Aussparung und die zweite Aussparung (82) miteinander kommunizieren.

11. Clip-Mechanismus nach Anspruch 10, wobei die erste Aussparung (82) eine Stufe (84) zum Sichern des Verriegelungselements (80) gegenüber einer Bewegung aus dem Schlitz (20) definiert.

## Revendications

1. Mécanisme de pince (10, 60) pour maintenir un élément sur un bouton saillant, le bouton définissant une partie de tige et une partie de tête d'une largeur supérieure à celle de la partie de tige, le mécanisme de pince définissant une fente (20) à travers celui-ci qui est fermée aux deux extrémités, une partie de la fente étant suffisamment large pour que la partie de tête du bouton saillant la traverse, alors qu'une autre partie de la fente est plus étroite et suffisamment large pour contenir la partie de tige du bouton saillant mais pas suffisamment large pour que la partie de tête du bouton saillant la traverse, le mécanisme de pince comprenant un élément de cadre (12 ; 62) et un élément définissant une fente (14 ; 64) mobile par rapport à l'élément de cadre (12 ; 62) entre une première position relative et une deuxième position relative, et ***caractérisé en ce qu'**il* comprend deux éléments de verrouillage (24 ; 80) disposés sur des côtés opposés de la fente (20) directement opposés l'un à l'autre à une position intermédiaire le long de la longueur de la fente (20), disposés de sorte que, lorsque l'élément définissant une fente (14 ; 64) est dans la première position relative, chaque élément de verrouillage (24 ; 80) soit maintenu dans une position faisant saillie dans la fente (20), empêchant ainsi la partie de tige de se déplacer le long de la fente (20) pour passer les éléments de verrouillage (24 ; 80), tandis que dans la deuxième position relative les éléments de verrouillage (24 ; 80) n'empêchent pas le déplacement de la partie de tige le long de la fente (20).

2. Mécanisme de pince selon la revendication 1 dans lequel l'élément définissant une fente (14 ; 64) est sollicité élastiquement dans la première position relative.

3. Mécanisme de pince selon la revendication 2 dans lequel l'élément définissant une fente (14 ; 64) est sollicité élastiquement dans la première position relative par au moins un ressort de compression (36).

4. Mécanisme de pince selon l'une quelconque des revendications précédentes dans lequel l'élément de cadre (12 ; 62) comprend des éléments de plaques supérieurs et inférieurs (30 ; 70) et l'élément définissant une fente (14 ; 64) est situé entre les éléments de plaques supérieurs et inférieurs (30 ; 70).

5. Mécanisme de pince selon l'une quelconque des revendications précédentes dans lequel chaque élément de verrouillage est une bille (24).

6. Mécanisme de pince selon la revendication 5 dans lequel l'élément de cadre (12) définit un chemin (44) le long duquel l'élément de verrouillage (24) peut se déplacer, le chemin (44) s'étendant dans une direction perpendiculaire à la fente (20) ; et dans lequel l'élément définissant une fente (14) définit également un premier évidement (46) pour l'élément de verrouillage (24) qui empêche le mouvement le long du chemin (44), et un deuxième évidement (48) pour l'élément de verrouillage (24) qui permet le mouvement le long du chemin (44).

7. Mécanisme de pince selon la revendication 6 dans lequel le premier évidement (46) et le deuxième évidement (48) communiquent ensemble.

8. Mécanisme de pince selon la revendication 6 ou la revendication 7 dans lequel l'élément définissant une fente (14) définit une protubérance (50) pour solliciter l'élément de verrouillage (24) le long du chemin (44) dans le deuxième évidement (48), à mesure que le mécanisme de pince se déplace vers la deuxième position relative.

9. Mécanisme de pince selon l'une quelconque des revendications 1 à 4 dans lequel chaque élément de verrouillage est une barre (80) reliée en pivot à l'élément de cadre (62).

10. Mécanisme de pince selon la revendication 9 dans lequel l'élément définissant une fente (64) définit également un premier évidement pour l'élément de verrouillage (80) qui empêche le mouvement le long du chemin, et un deuxième évidement (82) pour l'élément de verrouillage (80) qui permet le mouvement le long du chemin, dans lequel le premier évidement et le deuxième évidement (82) communiquent ensemble.

11. Mécanisme de pince selon la revendication 10 dans lequel le premier évidement (82) définit une étape (84) pour maintenir l'élément de verrouillage (80) afin d'éviter le déplacement hors de la fente (20).
